# EUROPÄISCHE PATENTSCHRIFT

(11) **EP 1 096 631 B1**
(45) Veröffentlichungstag und Bekanntmachung des Hinweises auf die Patenterteilung: **12.08.2009**
(21) Anmeldenummer: 99121463.6
(22) Anmeldetag: 28.10.1999
(51) Int. Cl.: H02G 3/38

(54) **Anordnung zur Befestigung einer Hausinstallationsschnittstelle in einer Wand**
Mechanism for mounting a domestic installation interface in a wall
Dispositif de fixation d'un interface d'installation domestique dans une paroi

(43) Veröffentlichungstag der Anmeldung: 02.05.2001
(73) Patentinhaber: Feller AG, 8810 Horgen (CH); ZZ WANCOR, 8105 Regensdorf (CH)
(72) Erfinder: Torma, Mikael, 4617 Gunzgen (CH); Gassmann, Robert, 8820 Wädenswil (CH); Fritsche, Michael, 9500 Wil (CH); Ganz, Jochen, 8003 Zürich (CH)
(74) Vertreter: Blum, Rudolf Emil

(56) Entgegenhaltungen:
- DE-A- 3 338 246
- FR-A- 2 543 372
- US-A- 5 500 487

## Beschreibung

Die Erfindung betrifft eine Anordnung zur Befestigung einer Hausinstallationsschnittstelle gemäss Oberbegriff des Anspruchs 1. Ferner betrifft die Erfindung wandseitige Haltemittel für eine solche Anordnung gemäss den Ansprüchen 8 bzw. 15 sowie ein Zargenteil für ein Haltemittel gemäss Anspruch 14, eine Montageplatte für die Anordnung gemäss Anspruch 18 und eine Reduktionsplatte gemäss Anspruch 22.

Zur Befestigung von Hausinstallationsschnittstellen, worunter Schnittstellen z.B. für Netzspannung (Steckdosen, Schalter), Telefon, Radio und Fernsehen verstanden werden, werden bis anhin in die gemauerte Wand Ausnehmungen gefräst und in diesen Ausnehmungen Einlasskästen befestigt, z.B. mittels Mörtel. Die Einlasskästen weisen in ihren Ecken Schraubenlöcher auf, damit Montageplatten mit Schrauben an den Einlasskästen befestigt werden können. An den Montageplatten werden vorgängig die eigentlichen Schnittstellen angeschraubt und mit den in die Einlasskästen geführten, in der Wand in Kabelkanälen eingezogenen Kabeln verdrahtet. Nach dem Arbeitsschritt des Einsetzens der Einlasskästen in der gemauerten Wand und vor dem Bestücken, Verdrahten und Anschrauben der Montageplatte wird die Wand mit Verputzschichten versehen. Es wird dabei zwar versucht, die Einlasskästen gegen die Verschmutzung mit Verputzmaterial zu schützen, doch erfolgt in der Praxis häufig doch eine Verschmutzung und insbesondere werden die Schraubenlöcher für die Schraubbefestigung der Montageplatte mit Verputzmaterial gefüllt, was die Befestigung der Montageplatte später umständlich macht.

Der Erfindung liegt deshalb die Aufgabe zugrunde die Montage von Hausinstallationsschnittstellen in einer Wand zu erleichtern.

US-A-5 500 487 zeigt die Wandbefestigung von elektrischen Apparaten, wie Schaltern und Steckdosen, bei welcher die Apparate ein speziell geformtes Gehäuse aufweisen, das in einen entsprechend geformten Einlasskasten einschiebbar ist. Die Befestigung erfolgt mit einer Frontplatte mit Schraubbefestigung.
Der Erfindung liegt deshalb die Aufgabe zugrunde die Montage von Hausinstallationsschnittstellen in einer Wand zu erleichtern.

Diese Aufgabe wird bei einer Anordnung der eingangs genannten Art durch die kennzeichnenden Merkmale des Anspruchs 1 erreicht.

Dadurch, dass an der Montageplatte und am wandseitigen Haltemittel zusammenwirkende Formschlussteile vorgesehen sind, welche eine Befestigung der Montageplatte durch Ineinandergreifen bzw. Verhaken dieser Teile erlauben, kann eine raschere und einfachere Montage erfolgen. Die ineinandergreifenden Teile können ferner so ausgestaltet werden, dass Verputzablagerungen die Funktion nicht beeinträchtigen und/oder dass solche Ablagerungen einfach zu entfernen sind.

Bevorzugterweise sind die Halteteile so ausgestaltet bzw. verstellbar angeordnet, dass ein Ineinandergreifen derselben bei verschiedenen Abständen und allenfalls stufenlos verstellbarem Abstand der Montageplatte von den wandseitigen Haltemitteln möglich ist. Dadurch wird eine Anpassung an verschiedene Verputzdicken auf einfache Weise möglich.

Der Erfindung liegt ferner die Aufgabe zugrunde, wandseitige Haltemittel für eine Anordnung zur Befestigung von Hausinstallationsschnittstellen zu schaffen, welche eine einfache Montage der wandseitigen Haltemittel möglichst ohne Fräsarbeiten bzw. Beschädigung der gemauerten Wand erlauben.

Diese Aufgabe wird durch ein wandseitiges Haltemittel mit den kennzeichnenden Merkmalen des Anspruchs 8 gelöst.

Dadurch, dass ein Mauerstein mit einer bereits eingeformten Installationsausnehmung in Kombination mit einem in dieser Anordnung einfach befestigbaren Halteelementen verwendet wird, können die Installationsöffnungen ohne Fräsarbeit bereits bei der Bildung der Mauer geschaffen werden und die Montage der Schnittstelle kann einfach und rasch erfolgen.

Gemäss einem weiteren Aspekt der Erfindung bzw. gemäss Anspruch 15 wird als wandseitiges Haltemittel ein Einlasskasten verwendet, wie dies grundsätzlich bekannt ist, wobei nun gemäss der Erfindung dieser Einlasskasten mit ersten Halteteilen versehen ist, was die schnelle Befestigung der Montageplatte mit den formschlüssigen, ineinandergreifenden Halteteilen ermöglicht. Der Einlasskasten kann dabei wie bis anhin auf herkömmliche Weise in eine in die Wand gefräste Öffnung eingesetzt werden.

Die Erfindung betrifft weiter eine Montageplatte für eine Anordnung zur Befestigung von Hausinstallationsschnittstellen, welche die rasche und einfache Befestigung der Montageplatte an den wandseitigen Haltemitteln erlaubt. Diese Montageplatte ist gemäss Anspruch 18 definiert. Weiter betrifft die Erfindung eine Reduktionsplatte, welche bei Ausnehmungen einsetzbar ist, die grösser sind als die zu befestigende Montageplatte. Diese Reduktionsplatte ist gemäss Anspruch 22 definiert.

Im folgenden werden Ausführungsbeispiele der Erfindung anhand der Zeichnungen näher erläutert. Dabei zeigt
Figur 1 eine Ansicht einer ersten Ausführungsform der wandseitigen Haltemittel mit einem Mauerstein und Zargenteilen;
Figur 2 eine Ansicht der einen Zarge eines Haltemittels gemäss Figur 1 sowie einer Montageplatte mit zweiten Halteteilen;
Figur 3 eine Ansicht einer weiteren Ausführungsform der Zarge des wandseitigen Haltemittels;
Figur 4 eine Ansicht des wandseitigen Haltemittels mit der Zarge nach Figur 3 in einer Wand;
Figur 5 eine Ansicht von hinten auf eine Anordnung gemäss der Erfindung mit einer Reduktionsplatte;
Figur 6 einen Kunststoffeinlasskasten mit Halteteilen;
Figur 7 eine Darstellung des Einlasskastens und der Halteteile vor deren Montage;
Figur 8 den Eingriff eines der Halteteile der Montageplatte am Halteteil des Einlasskastens; und
Figur 9 eine Ansicht einer Ausführungsform des Mauersteins des wandseitigen Haltemittels.

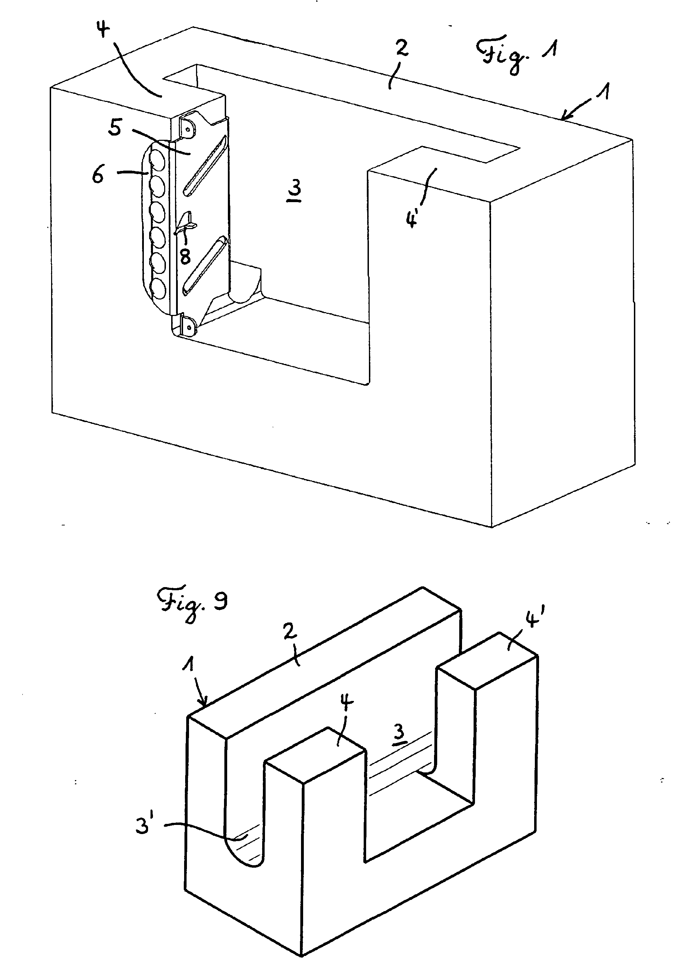

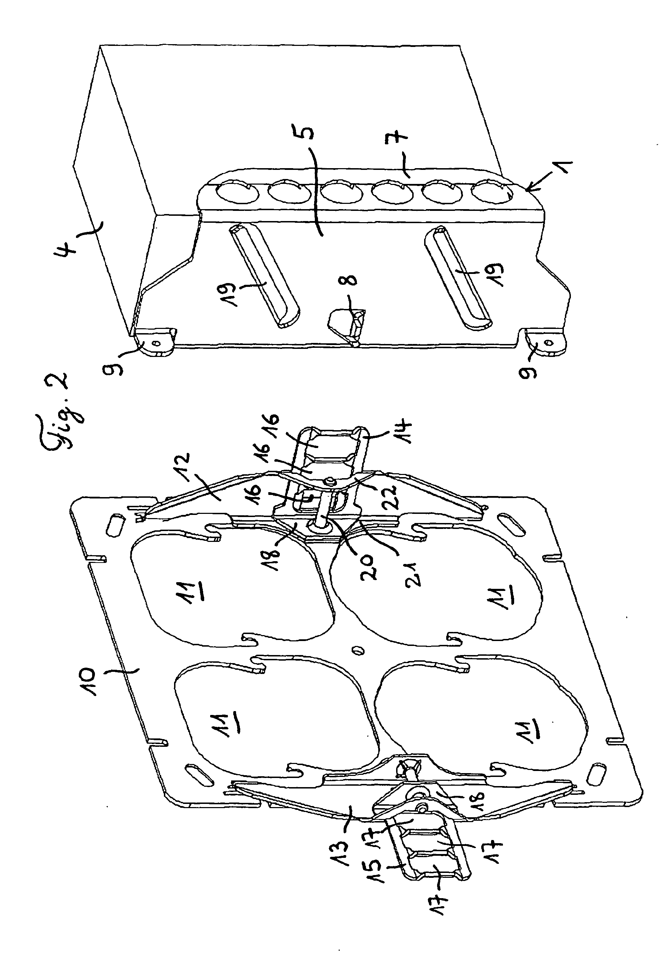

Figur 1 zeigt eine erste Ausführungsform des wandseitigen Haltemittels 1 der Anordnung in schematischer, perspektivischer Ansicht. Bei dieser Ausführungsform umfasst das wandseitige Haltemittel 1 einen Mauerstein 2, welcher z.B. die Abmessungen eines üblichen Backsteines aufweist, und materialmässig z.B. als Backstein, Kalksandstein oder aus einem anderen bekannten Mauersteinmaterial gebildet ist und welcher zur Bildung einer Wand eines Hauses dient. An denjenigen Stellen der Wand, wo eine Hausinstallationsschnittstelle, z.B. eine Steckdose oder ein Lichtschalter, ein Telefonanschluss oder ein Radio/ TV-Anschluss angeordnet werden soll, wird anstelle eines normalen Mauersteins ein derartiger Mauerstein mit einer Installationsausnehmung 3 anstelle eines normalen Mauersteins in der Wand vermauert. Die Installationsausnehmung 3 ist dabei gegen den Raum hin offen, von welchem aus die Hausinstallationsschnittstelle zugänglich sein soll. In dem gezeigten Beispiel ist die raumseitige Öffnung der Ausnehmung 3 seitlich durch stegartige Vorsprünge 4 und 4' des Mauersteins begrenzt. An diesen Begrenzungen werden Zargenteile 5 in Eingriff gebracht, wobei in der Figur 1 nur eines der Zargenteile dargestellt ist. Das andere Zargenteil würde sich in analoger Weise am Steg 4' befinden. Diese Zargenteile 5 können nach der Vermauerung des Mauersteins 2 in die Installationsausnehmung 3 eingebracht werden und mit den Stegen 4 in Formschluss gebracht werden, wozu die Zargenteile 5 mit Lappen 6 und 7 (Figur 2) versehen sind, welche die Stege umgreifen und einen Formschluss zwischen Steg und Zargenteil bewirken. Die Zargenteile, die in der Regel aus Metall hergestellt sind, z.B. aus Aluminium, sind dabei so dimensioniert, dass sie mit den Stegen 4 des Mauer- bzw. Backsteines eine in Richtung des Raumes formschlüssige Verbindung eingehen und mit dem Aufschieben auf diese Stege an dem Mauerstein befestigt sind. Die Zargenteile können zu diesem Zweck mit zum Mauerstein gerichteten Ausformungen, z.B. krallenförmigen Ausformungen, versehen sein. Bei dem in Figur 2 dargestellten Zargenteil 5 sind solche gegen den Steg 4 hinweisende Ausformungen mit 19 bezeichnet. Jedes der Zargenteile ist mit mindestens einem Halteteil 8 versehen, wobei dies in dem gezeigten Beispiel eine Ausformung 8 ist, welche z.B. von einer umgebogenen, nasenförmigen Lasche der metallenen Zarge gebildet ist, welche von der Zargenfläche weg z.B. rechtwinklig gegen die Mitte der raumseitigen Öffnung der Installationsausnehmung 3 abgebogen ist.

Figur 2 zeigt ebenfalls eine Ansicht der einen Zarge 5 des wandseitigen Haltemittels 1, wobei von dessen Mauerstein in dieser Figur nur der Steg 4 angedeutet ist. Der Rest des Mauersteines ist zur besseren Darstellung weggelassen. Die Zarge von Figur 2 zeigt ebenfalls das Halteteil 8, welches, wie in Figur 1 ungefähr in der Hälfte der Höhe der Installationsausnehmung 3 angeordnet ist. Die Zarge 5 von Figur 2 zeigt ferner abgebogene Laschen 9, welche mit Schraubenlöchern mit Gewinden versehen sind, so dass an diesen Zargen auch eine herkömmliche Befestigung einer Montageplatte mit Schrauben möglich ist, wie dies von den herkömmlichen Einlasskästen bekannt ist.

Gemäss der Erfindung erfolgt nun indes die Befestigung einer Montageplatte 10 an dem wandseitigen Haltemittel 1 bzw. an dessen Zargen 5 über ineinandergreifende Halteteile. In Figur 2 ist zur Erläuterung derselben eine Montageplatte 10 im Abstand von der Zarge 5 dargestellt, wobei das eine Halteteil der Montageplatte 10 zum Eingriff an der nasenförmigen Lasche 8 der Zarge 5 ausgerichtet ist. Die Montageplatte 10 weist auf übliche Weise Ausnehmungen 11 auf, in bzw. an welchen auf herkömmliche Weise die Steckdosenelemente, Schalterelemente usw. angeordnet werden können. Die an der Montageplatte 10 befestigten Schnittstellenelemente werden nachfolgend mit den aus der Installationsausnehmung 3 austretenden Kabeln verdrahtet. Die Kabel werden dabei auf herkömmliche Weise in die Installationsausnehmung 3 eingeführt, z.B. durch einen von unten her oder von oben her in den Mauerstein führenden Kabelkanal, welcher in der Mauer gefräst worden ist. Für die Erläuterung der Haltemittel spielt indes die Zuführung der Kabel in den Mauerstein 2 keine Rolle; eine bevorzugte Zuführung wird später anhand von Figur 9 erläutert. Die Montageplatte 10 ist bei dem gezeigten Beispiel mit zweiten Halteteilen versehen, welche von einem Träger 12 bzw. einem Träger 13 gebildet werden, welche jeweils einen Schlitten 14 bzw. 15 tragen, welche Schlitten mit Ausnehmungen 16 bzw. 17 versehen sind, die zum Eingriff an den wandseitigen Halteteilen 8 vorgesehen sind, wobei die die Ausnehmungen begrenzenden Stege in Formschlussverbindung mit den hinteren Kanten der abgebogenen Laschen 8 treten, da die Laschen 8 in eine der Ausnehmungen 16 bzw. 17 hineinragen, womit eine Verbindung zwischen dem jeweiligen Schlitten 14 bzw. 15 und der jeweiligen Nase 8 der beidseits der Öffnung der Installationsausnehmung angeordneten Zargen 5 geschaffen wird.

In dem gezeigten Beispiel sind die zweiten Halteteile 12-17 der Montageplatte 8 so angeordnet, dass eine Verstellmöglichkeit des Abstandes der Montageplatte 10 von der Zarge 5 besteht. Zu diesem Zweck ist der Schlitten 14 an seinem montageplattenseitigen Ende mit einem abgewinkelten Flansch 18 versehen, in welchem eine Gewindebohrung angeordnet ist. Durch diese Gewindebohrung läuft ein Gewindebolzen 20, der in den abgewinkelten Flanschen 21 und 22 des Trägers 12 drehbar gehalten ist. Bei einer Drehung des Gewindebolzens 20, welcher an seinem montageplattenseitigen Ende mit einem Eingriffsmittel für ein Werkzeug, z.B. einen Schraubenzieher, versehen ist, wird der Schlitten je nach Drehrichtung des Gewindebolzens nach vorne zur Montageplattenebene oder nach hinten zur Zarge 5 hin verfahren. Auf diese Weise kann der Schlitten verstellt werden, wodurch sich auch eine Verstellung des Abstandes der Montageplatte zur Zarge 5 bzw. zur verputzten Wand ergibt, wenn die Halteteile 8 in den Halteteilen der Montageplatte in Eingriff sind. Mit anderen Worten, wenn die Montageplatte gegen die verputzte Wand gedrückt wird, und eine der Ausnehmungen 16 die Lasche 8 übergreift, so dass sich diese durch eine der Ausnehmungen 16 erstreckt, so kann nachfolgend durch ein Drehen der Schraube 22 derart, dass sich der Schlitten nach vorne zur Montageplatte hin bewegt, ein festes Anliegen des jeweils hinteren Steges der Ausnehmung 16 an die Lasche 8 ergeben, so dass die Montageplatte in umgekehrter Richtung durch das Drehen der Schraube gegen die Wand gedrückt wird. Auf diese Weise ist bei der ineinandergreifenden Formschlussverbindung durch die ersten Halteteile 8 und die zweiten Halteteile 12-22 zusätzlich zur Befestigung eine einfache Anpassung an die Verputzdicke möglich. Da die Montageplatte 10 nur an zwei Stellen und zudem um die Lasche 8 schwenkbar an den Zargen 5 gehalten wird, ergibt sich eine sehr gute Anpassung der Fläche der Montageplatte 10 an die Wandfläche, auch wenn der Verputz nicht gleichmässig über der Wand aufgetragen worden ist.

Der Schlitten 15 mit den Ausnehmungen 17 wird bei der Befestigung der Montageplatte auf dieselbe Weise an der entsprechenden Nase 8 in Eingriff gebracht und durch Drehen des Gewindebolzens entsprechend verfahren. In der Figur 2 ist indes dieses Halteteil 13, 15, 17 der Montageplatte zur Erläuterung einer weiteren Ausgestaltung desselben in einer Stellung gezeigt, in der es mittels seines Trägers 13, der an der Montageplatte schwenkbar angeordnet ist, in die Ebene der Montageplatte geschwenkt ist, so dass der Schlitten 15 in der gezeigten Stellung parallel zur Montageplattenfläche verläuft. Diese Stellung wird bei der Lagerung und dem Transport der Montageplatte bevorzugt, damit diese möglichst wenig Platz einnimmt. Ebenfalls bevorzugt ist diese Stellung bei der Montage und Verdrahtung der Apparateschnittstellen an der Montageplatte 10, damit die Träger 12 und 13 bzw. die Haltemittel die Zugänglichkeit zu den Schnittstellen bei der Verdrahtung nicht erschweren. Zur Befestigung der Montageplatte an der Wand wird natürlich das Halteteil mit dem Träger 13, dem Schlitten 15 und den Ausnehmungen 17 in dieselbe, im wesentlichen senkrecht von der Montageplattenebene abstehende Stellung gebracht, wie das andere Halteteil mit dem Träger 12. Das Scharnier der Träger 12 bzw. 13 an der Montageplatte kann durch einfache Schlitze in derselben und abgewinkelte, in die Schlitze eingreifende Laschen der Träger 12 bzw. 13 gebildet werden.

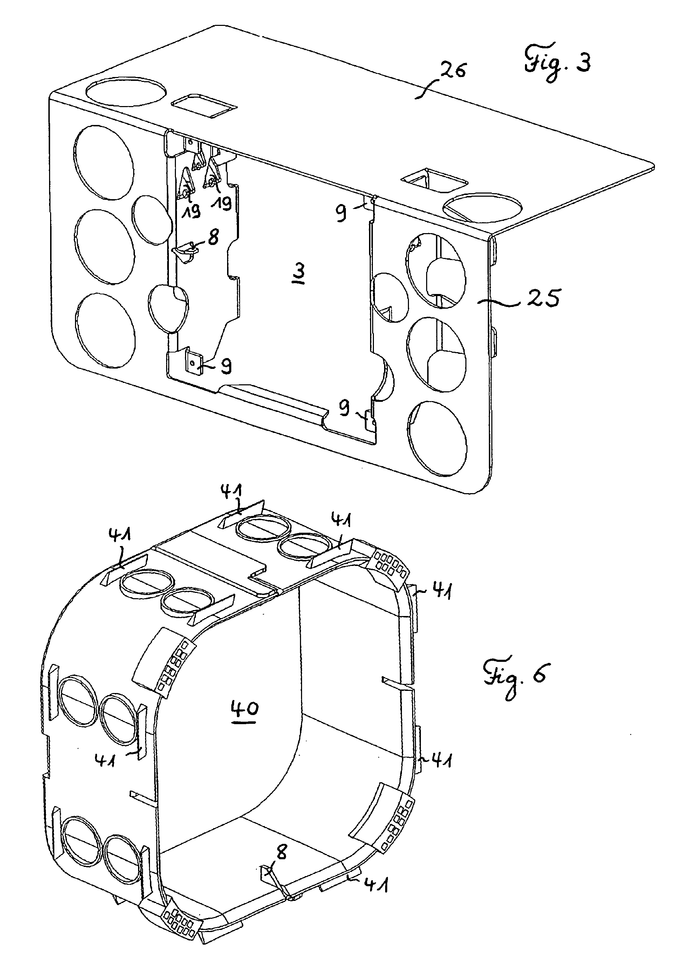

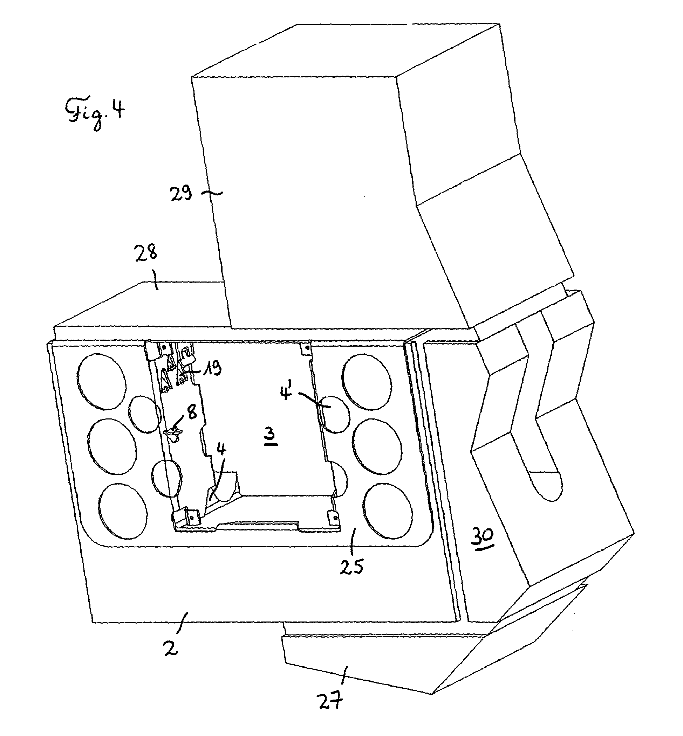

Figur 3 zeigt eine weitere Ausführungsform einer Zarge für das erste wandseitige Haltemittel, welches auch bei dieser Ausführung einen Mauerstein umfasst, der ebenfalls wie in Figur 1 oder in Figur 9 gezeigt ausgebildet sein kann. Die Zarge 25 ist in diesem Fall als ein Stück ausgebildet und besteht somit nicht aus zwei separaten Zargenteilen 5, wie beim vorhergehenden Beispiel. Die Zarge 25 trägt in diesem Fall beide abgebogene Laschen 8 (in Figur 3 ist nur eine sichtbar), welche in die raumseitige Öffnung der Installationsausnehmung 3 hineinragen. Die Zarge 25 bildet bevorzugterweise einen Deckel 26 für die Installationsausnehmung 3. Dies bewirkt, dass die Zarge 25 in den Backstein eingesetzt werden muss, bevor die obere Reihe Backsteine in der Wand über den Backstein mit der Installationsausnehmung 3 gemauert wird. Der Deckel 26 für die Installationsausnehmung bildet dabei eine Auflagefläche für die Mörtelschicht 28, wie dies in Figur 4 gezeigt ist, wo das wandseitige Haltemittel, gebildet aus dem Mauerstein 2 mit Installationsausnehmung 3 und der Zarge 25 im Ausschnitt einer Wand dargestellt ist, wobei an den Mauerstein seitlich ein weiterer Mauerstein 30 anschliesst und der Mauerstein 29 der oberen Mauersteinreihe und der Stein 27 der unteren Reihe (ebenfalls nur teilweise dargestellt) gezeigt ist. Vorzugsweise bildet dabei die Zarge 25 mit dem Mauerstein 2 einen Verbund, welcher in dieser Form bereits an der Baustelle angeliefert und so vermauert wird. Zu diesem Zweck können an der Zarge 25 mauersteinseitige Vorsprünge 19 vorgesehen sein, welche einen sicheren Formschluss der Zarge am Mauerstein auch gegen ein Herausnehmen nach oben der Zarge 25 aus dem Mauerstein bilden. Gegen wandseitiges Herausnehmen ist die Zarge 25 durch ihre abgewinkelten, an den Stegen 4 formschlüssig den Mauerstein umgreifenden Laschen ohnehin gesichert, wie das bereits anhand der Figur 1 und 2 gezeigt worden ist.

Die Befestigung einer Montageplatte 10 erfolgt bei dem in Figur 4 gezeigten wandseitigen Haltemittel auf dieselbe Weise wie dies anhand der Figur 2 erläutert worden ist. Auch hier wird die mit den Schnittstellen bestückte und mit den aus der Installationsöffnung 3 heraustretenden Kabeln verkabelte Montageplatte 10 mittels deren Halteteilen an den abgewinkelten Laschen in Eingriff gebracht und durch ein Heranziehen des jeweiligen Schlittens durch ein Drehen des jeweiligen Gewindebolzens gegen die Wand hin verspannt. Die in Figur 4 gezeigte Wand ist bis zu diesem Befestigungsschritt mit mehreren Verputzschichten verputzt worden. Es ist ersichtlich, dass bei der formschlüssigen Befestigung Verputzreste, welche auf die Nasen 8 fallen, keinen Einfluss auf die formschlüssige Verbindung mit den Ausnehmungen 16 bzw. 17 des Schlittens bzw. mit den Halteteilen der Montageplatte hat. Sollte eine Verputzanhäufung auf der Nase 8 so gross sein, dass sie trotzdem das Einfahren der Nase 8 in eine der Ausnehmungen 16 oder 17 der Schlitten behindert, so kann der entsprechende Verputz auf der glattflächigen Nase 8 durch einfaches Abwischen oder Wegdrükken entfernt werden, was hingegen bei Verputzresten, die in den Gewindelöchern der herkömmlichen Befestigungsart sitzen, nur sehr schwer der Fall ist und ein Einführen der entsprechenden herkömmlichen Schraubenbefestigung nur sehr schwer ermöglicht. Zum Ausgleichen von Verputzdikkeunterschieden müssen zudem bei der herkömmlichen Befestigungsart die Schrauben 9 unterschiedlich weit angezogen werden, was aber wegen der herkömmlichen Vierpunkthalterung trotzdem ein unbefriedigendes Anliegen der Montageplatte am Verputz ergeben kann. Durch die in den Beispielen gezeigte Zweipunktlagerung, vorzugsweise ungefähr in der Mitte der Höhe der Installationsausnehmung 3, ergibt sich die Möglichkeit für die Montageplatte, sich besser an die unterschiedlichen Verputzdicken anzupassen, da auch ein Schwenken der Montageplatte um die hintere Kante der Nase 8, welche mit einer Kante eines Schlittensteges in Eingriff ist, möglich ist.

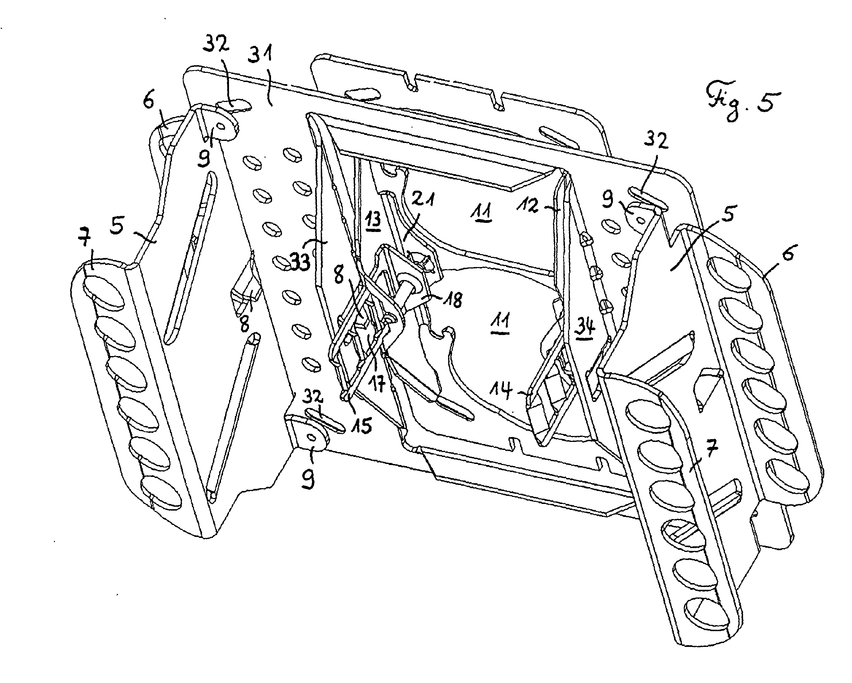

Figur 5 zeigt ein weiteres Ausführungsbeispiel der Anordnung mit einer Reduktionsplatte 31, wobei - wie auch in den anderen Figuren - gleiche Bezugszeichen wie bis anhin verwendet die selben Teile bezeichnen. Bei dem Beispiel von Figur 5 sind wiederum zwei separate Zargenteile 5 dargestellt, die Reduktionsplatte 31 könnte aber auch an einer einstückigen Zarge gemäss Figur 3 befestigt sein. In dem gezeigten Beispiel soll eine Montageplatte 10, welche nur zwei Installationsschnittstellen aufnehmen kann über der Installationsausnehmung befestigt werden, wobei die Öffnung der Installationsausnehmung in diesem Fall grösser ist als die Breite der Montageplatte 10. Natürlich könnte ein Mauerstein 2 mit einer geringeren Öffnung der Installationsausnehmung 3 vorgesehen sein, so dass die schmale Montageplatte 10 direkt an den Laschen 8 der Zargen 5 befestigt werden könnte. Bevorzugt ist indes ein standardisierter Mauerstein mit nur einer Öffnungsweite, so dass in dem gezeigten Beispiel die Reduktionsplatte 31 vorgesehen ist, welche eine schmalere Öffnung für die Installationsausnehmung schafft. Die Reduktionsplatte 31 wird dazu, vorzugsweise vor den Verputzarbeiten, mit Schrauben an den Zargenteilen 5 befestigt, wozu in dem gezeigten Beispiel die Laschen 9 mit den Gewindelöchern dienen, und in der Reduktionsplatte 31 entsprechende Löcher 32 vorgesehen sind, durch welche die Gewindeschäfte der Schrauben 32 hindurchtreten und in die Gewindelöcher der Laschen 9 eingreifen, so dass die Reduktionsplatte mit den Zargenteilen 5 verschraubt werden kann. Die Reduktionsplatte 31 bildet dann eine neue, schmalere Öffnung zur Installationsausnehmung. Zur Schnellbefestigung der Montageplatte 10 für die Schnittstellen sind an der Reduktionsplatte 31 abgewinkelte Öffnungsbegrenzungen 33 und 34 vorgesehen, welcher ihrerseits wiederum die nasenförmigen Laschen 8 tragen, an denen die Montageplatte 10 mit ihren Halteteilen formschlüssig eingreifen kann. Vorzugsweise sind diese Halteteile wiederum so ausgestaltet, wie dies anhand der Figur 2 erläutert worden ist, so dass auch hier ein verfahrbarer Schlitten vorgesehen ist, welcher nach dem Einhaken an der Lasche 8 ein Verspannen der Montageplatte 10 erlaubt.

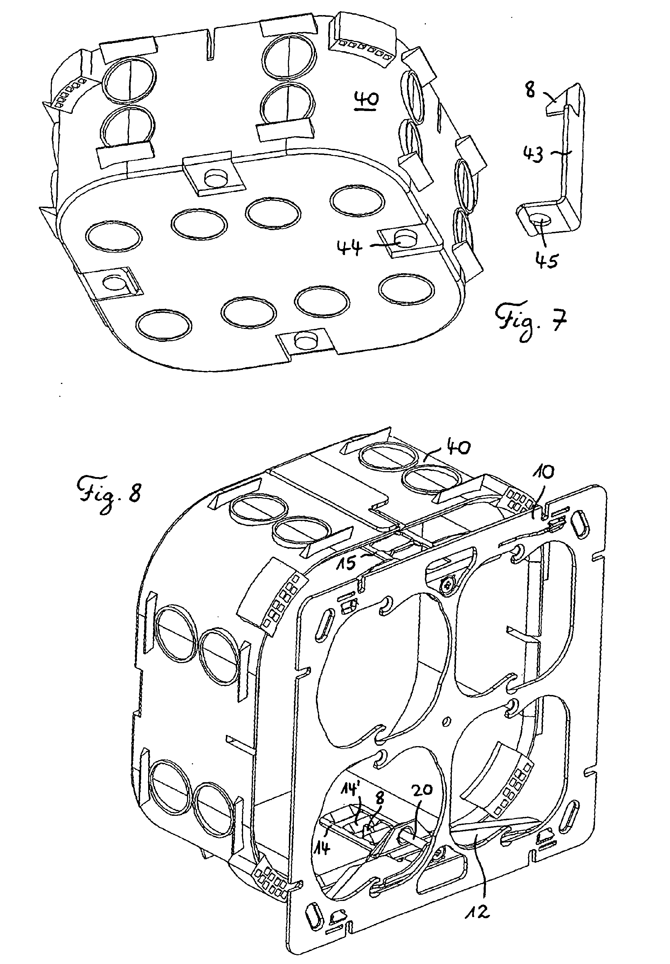

Figur 6 zeigt eine weitere Ausführungsform der wandseitigen Haltemittel. Diese werden in diesem Beispiel von einem Einlasskasten 40 gebildet, welcher in an sich bekannter Weise geformt und aus Kunststoff hergestellt sein kann. Dieser Einlasskasten ist nun ebenfalls mit ersten Halteteilen versehen, welche auch in diesem Beispiel als nasenförmige Laschen 8 ausgestaltet sind. Der Einlasskasten 40 kann auf herkömmliche Weise in einer ausgefrästen Backsteinöffnung z.B. mittels Mörtel oder nur mittels der Formschlusselemente 41 befestigt werden. Die Befestigung einer Montageplatte 10 an diesen erfindungsgemässen Einlasskasten erfolgt dann allerdings nicht mehr auf herkömmliche Art über Schraubverbindungen in den Ecken, sondern wiederum, wie bereits anhand der vorhergehenden Beispiele geschildert, durch ein Eingreifen der Haltemittel der Montageplatte an den Haltemitteln 8 des Einlasskastens. Figur 8 zeigt entsprechend einen solchen Einlasskasten mit einer daran zu befestigenden Montageplatte 10. Es ist darin ersichtlich, wie der Steg 14' des Schlittens 14, die hintere Kante der in den Einlasskasten hineinragenden Lasche 8 kontaktiert, um die Montageplatte 10 formschlüssig am Einlasskasten zu befestigen. Ersichtlich ist hier wiederum eine Schraube 20, welche das Verfahren des Schlittens 14 erlaubt. Ein Lösen der Befestigung kann ebenfalls durch ein Verfahren des Schlittens erfolgen, sowie durch ein geringfügiges Wegklappen des Schlittens 14 in Richtung auf die Mitte der Montageplatte 10 hin, so dass die Ausnehmung 16 des Schlittens 14 nicht mehr von der Lasche 8 durchsetzt wird. Anstelle eines Verfahrens des Schlittens 14 mittels einer Schraube könnte der Schlitten z.B. auch gegen eine Federkraft nach hinten zum Grund der Installationsöffnung hin bewegbar sein, so dass bei der Befestigung der Montageplatte ein Nachhintendrücken des Schlittens 14 gegen die Federkraft erfolgt, wozu im Schlittenträger z.B. ein Loch zur Einführung eines Schraubendrehers oder eines Stiftes vorgesehen sein kann. Der Schlitten wird dabei so lange gegen die Federkraft nach hinten gedrückt, bis der Benützer die Federkraft für genügend hält und eine der Ausnehmungen 16 mit der Lasche 8 fluchtet, so dass sich beim Loslassen des Schlittens ein geringfügiges Nachvornebewegen aufgrund der Federkraft ergibt, bis der entsprechende Steg, z.B. der Steg 14', des Schlittens wiederum an der hinteren Kante der Lasche 8 in Eingriff gelangt. Die Kraft der Feder bzw. der Federn beider Halteteile der Montageplatte, bestimmen damit die Kraft, mit welcher die Montageplatte 10 gegen den Verputz angedrückt wird.

Figur 7 zeigt eine Ausführungsform für die Anbringung der Halteteile an einem Installationskasten, wobei der Installationskasten 40 in der Regel aus Kunststoff gebildet ist und das Halteteil 43 aus Metall. Dieses ist an der Rückseite des Einlasskastens 40 durch eine Abwinkelung des Halteteiles und eine Ausnehmung im Boden, allenfalls noch mit Hilfe eines Formstückes 44, welches in eine Ausnehmung 45 der Abwinkelung eingreift, gehalten. Der Halteteil 43 bildet dabei die Lasche 8, welche durch einen Schlitz in der Wand des Einlasskastens in dessen Innenraum hineinragt. Auf diese Weise können beliebig geformte Einlasskästen mit Halteteilen versehen werden. Auch bei der Lösung mit Einlasskasten kann eine Reduktionsplatte 32 vorgesehen sein, wie dies anhand von Figur 5 erläutert worden ist. In diesem Fall wird die Reduktionsplatte 32 an einem herkömmlichen Einlasskasten mittels Schrauben auf herkömmliche Weise befestigt. Die Reduktionsplatte bildet dann wiederum die wandseitigen Halteteile zur Befestigung einer mit entsprechenden Halteteilen versehenen Montageplatte.

Anstelle der in den Beispielen gezeigten nasenförmigen Laschen 8 können natürlich beliebig geformte erste Halteteile vorgesehen werden, die in Formschluss mit ebenfalls beliebig geformten zweiten Halteteilen an der Montageplatte treten können. Die nasenförmige Lasche weist den Vorteil auf, dass deren schräge Rampe ein Überfahren des als Beispiel gezeigten Schlittens bis zur gewünschten Ausnehmung desselben über die Lasche ermöglicht.

Figur 9 zeigt eine bevorzugte Ausführungsform des Mauersteins 2 des wandseitigen Haltemittels mit den Zargen 5 oder einer Zarge 25, wobei die Zargen in Figur 9 nicht dargestellt sind. Der Mauerstein weist dabei einen durchgehenden, von Stirnseite zu Stirnseite reichenden Kabelkanal 3' auf, welcher mit der Installationsöffnung 3 in Verbindung steht. Die Zuführung der Kabel von einem an diesen Mauerstein heranführenden Kabelkanal erfolgt dann bevorzugterweise via den im Mauerstein 2 eingeformten Kabelkanal.

## Patentansprüche

1. Anordnung zur Befestigung einer Hausinstallationsschnittstelle in einer Wand (2,27,28,29), wobei die Anordnung ein wandseitiges Haltemittel (1, 40) mit ersten Halteteilen (8) und eine an dem wandseitigen Haltemittel befestigbare Montageplatte (10) zur Aufnahme mindestens einer Schnittstelle umfasst, **dadurch gekennzeichnet, dass** die Montageplatte (10) zum Zusammenwirken mit den ersten Halteteilen (8) bestimmte zweite Halteteile (12-22) aufweist, wobei die ersten und zweiten Halteteile zum formschlüssigen, verhakenden Ineinandergreifen ausgestaltet sind.

2. Anordnung nach Anspruch 1, **dadurch gekennzeichnet, dass** die ersten und/oder zweiten Halteteile (8; 12-22) derart angeordnet und insbesondere verstellbar sind, dass das Ineinandergreifen bei unterschiedlichen Abständen von Montageplatte (10) und wandseitigem Haltemittel (1, 40) erfolgen kann.

3. Anordnung nach Anspruch 2, **dadurch gekennzeichnet, dass** die ersten und/oder zweiten Halteteile abgestuft und vorzugsweise innerhalb jeder Stufe stufenlos verstellbar sind.

4. Anordnung nach einem der Ansprüche 1 bis 3, **dadurch gekennzeichnet, dass** das wandseitige Haltemittel (1) von einem zur Vermauerung in einer Mauersteinwand bestimmten Mauerstein (2), welcher eine eingeformte, eine raumseitig offene Wandausnehmung bildende Ausnehmung (3) aufweist und von mindestens einem Zargenteil (5, 25) gebildet wird, welches zum formschlüssigen Zusammenwirken mit mindestens einem Teil (4, 4') der Ausnehmungsbegrenzung des Mauersteins (2) ausgebildet ist und mindestens ein erstes Halteteil (8) trägt.

5. Anordnung nach Anspruch 4, **dadurch gekennzeichnet, dass** der Mauerstein (2) ferner einen Kabelkanal (3') bildet, vorzugsweise in der Form einer nach oben hin offenen Rinne.

6. Anordnung nach einem der Ansprüche 1 bis 3, **dadurch gekennzeichnet, dass** das wandseitige Haltemittel (1) von einem zur Anordnung in einer Wandausnehmung bestimmten Einlasskasten (40) mit an diesem angeordneten ersten Halteteilen (8) gebildet wird.

7. Anordnung nach einem der Ansprüche 4 bis 6, **dadurch gekennzeichnet, dass** die ersten Halteteile von vorspringenden Nasen (8) gebildet werden, welche vorzugsweise ungefähr in halber Höhe der Ausnehmung (3) zu liegen kommen.

8. Wandseitiges Haltemittel (1) für eine Anordnung nach einem der Ansprüche 1 bis 6, **dadurch gekennzeichnet, dass** dieses einen zur Vermauerung in einer Wand bestimmten, mit einer eingeformten Ausnehmung (3) versehenen Mauerstein (2), welche Ausnehmung zur Bildung einer raumseitig offenen Wandausnehmung angeordnet ist, und mindestens einen Zargenteil (5, 25) für die Ausnehmung umfasst, welcher zum formschlüssigen und/oder kraftschlüssigen Zusammenwirken mit mindestens einem Teil (4, 4') der Ausnehmungsbegrenzungsflächen ausgestaltet ist und mindestens ein erstes Halteteil (8) trägt.

9. Wandseitiges Haltemittel nach Anspruch 8, **dadurch gekennzeichnet, dass** der Mauerstein weitere einen stirnseitig offenen Kabelkanal (3') aufweist, vorzugsweise in Form einer nach oben offenen Rinne.

10. Wandseitiges Haltemittel nach Anspruch 8 oder 9, **dadurch gekennzeichnet, dass** der Zargenteil (5, 25) zur Positionierung des oder der Halteteile beidseits der Ausnehmung, vorzugsweise in ungefähr halber Höhe derselben, ausgestaltet ist.

11. Wandseitiges Haltemittel nach einem der Ansprüche 8 bis 10, **dadurch gekennzeichnet, dass** dieses einen Zargenteil (25) umfasst, der die obere Begrenzung (26) der Ausnehmung (3) bildet.

12. Wandseitiges Haltemittel nach Anspruch 8 oder 9, **dadurch gekennzeichnet, dass** dieses zwei Zargenteile (5) umfasst.

13. Wandseitiges Haltemittel nach einem der Ansprüche 8 bis 12, **dadurch gekennzeichnet, dass** die ersten Halteteile von in die Ausnehmung vorspringenden Nasen (8) gebildet werden.

14. Zargenteil (5) für ein wandseitiges Haltemittel nach einem der Ansprüche 8 bis 13, **dadurch gekennzeichnet, dass** dieses zur Umfassung eines Mauersteinbereiches ausgestaltet ist und mindestens ein Halteteil, insbesondere eine vorspringende Nase, trägt.

15. Wandseitiges Haltemittel für eine Anordnung nach einem der Ansprüche 1 bis 7, **dadurch gekennzeichnet, dass** dieses von einem Einlasskasten (40) mit an diesem angeordneten ersten Halteteilen (8) gebildet wird.

16. Wandseitiges Haltemittel nach Anspruch 15, **dadurch gekennzeichnet, dass** die Halteteile (8) von in den Kasteninnenraum ragenden Ausformungen gebildet werden, insbesondere von nasenförmigen Ausformungen, welche insbesondere ungefähr im Bereich der halben Höhe des Einlasskastens angeordnet sind.

17. Wandseitiges Haltemittel nach Anspruch 15 oder 16, **dadurch gekennzeichnet, dass** der Einlasskasten (40) aus Kunststoff gebildet ist und die Halteteile (8) von einem am Kasten angeordneten Element (43) aus Metall gebildet werden.

18. Montageplatte (10) für eine Anordnung nach einem der Ansprüche 1 bis 7, welche Montageplatte mindestens eine Ausnehmung (11) zur Montage einer Schnittstelle aufweist, **dadurch gekennzeichnet, dass** die Montageplatte mit Halteteilen (12 bis 22) versehen ist, welche zum formschlüssigen Eingriff in Halteteile (8) eines wandseitigen Haltemittels bestimmt sind.

19. Montageplatte nach Anspruch 18, **dadurch gekennzeichnet, dass** die Halteteile (14) in ihrem Abstand zur Plattenfläche einstellbar sind.

20. Montageplatte nach Anspruch 18 oder 19, **dadurch gekennzeichnet, dass** die Halteteile in eine Transportstellung im wesentlichen parallel zur Plattenfläche schwenkbar und aus dieser in eine Arbeitsstellung schwenkbar sind.

21. Montageplatte nach einem der Ansprüche 18 bis 20, **dadurch gekennzeichnet, dass** die Halteteile jeweils einen an einem Träger (12,13), insbesondere einem schwenkbar angeordneten Träger, verschieblich verstellbar angeordneten Schlitten (14,15) mit mindestens einer Ausnehmung, die zum Eingriff in ein erstes Halteteil bestimmt ist, aufweisen.

22. Reduktionsplatte (31) für eine Anordnung nach einem der Ansprüche 1 bis 7 zur Befestigung einer Montageplatte (10) über einer Ausnehmung, welche grösser als die Montageplatte ist, **dadurch gekennzeichnet, dass** die Reduktionsplatte zur Schraubverbindung mit den wandseitigen Haltemitteln (1, 5, 25) ausgestaltet ist und eine Öffnung aufweist, welche mit ersten Halteteilen (8) versehen ist.

## Claims

1. Arrangement for attaching a home installation interface into a wall (2, 27, 28, 29), wherein the arrangement comprises a wall-sided sustaining member (1, 40) with first sustaining parts (8) and a mounting plate (10) for the accommodation of at least an interface, which is mountable to the wall-sided sustaining member, **characterized in that** the mounting plate (10) comprises second sustaining parts (12-22), which are aimed to co act with the first sustaining parts (8), wherein the first and the second sustaining parts are formed to interlock in a form-fitting and catching way.

2. The arrangement according to claim 1, **characterized in that** the first and/or the second sustaining parts (8; 12-22) are arranged and particularly displaceable in such a way, that the interlocking can be carried out in presence of different distances of mounting plate (10) and wall-side sustaining member (1, 40).

3. The arrangement according to claim 2, **characterized in that** the first and/or the second sustaining parts are displaceable stepwise and preferably steplessly within each step.

4. The arrangement according to one of the claims 1 to 3, **characterized in that** the wall-sided sustaining member (1) consists of a building brick (2), which comprises a moulded-in and room-sided opened wall clearance building a hollow (3) and is aimed to be walled up in a building brick wall, and of at least a frame part (5, 25) which is formed to co act in a form-fitting way with at least a part (4, 4') of the border of the building brick (2) hollow and carries a first sustaining part (8).

5. The arrangement according to claim 4, **characterized in that** the building brick (2) further forms a cable channel (3'), preferably of the shape of an upwardly opened channelling.

6. The arrangement according to one of the claims 1 to 3, **characterized in that** the wall-sided sustaining member (1) consists of an intake box (40) aimed for arrangement into a wall clearance, with first sustaining parts (8) disposed to it.

7. The attachment arrangement according to one of the claims 4 to 6, **characterized in that** the first sustaining parts consist of noses (8) which are sticking out, which preferably come to lie in around half a height of the hollow (3).

8. Wall-sided sustaining member (1) for an arrangement according to one of the claims 1 to 6, **characterized in that** it carries a building brick (2) aimed for walling up into a wall, holding a moulded hollow (3), which hollow (3) is arranged to form a room-sided opened wall clearance, and comprises at least a frame part (5, 25) for the hollow, which is formed to co act with at least a part (4, 4') of the borders of the hollow surfaces in a form-fitting and/or force-fitting way and which carries at least a first sustaining part (8).

9. The wall-sided sustaining member according claim 8, **characterized in that** the building brick further comprises a cable channel (3') which is open on the face-side, preferably in shape of an upwardly open channelling.

10. The wall-sided sustaining member according to claim 8 or 9, **characterized in that** the frame part (5, 25) is formed for the positioning of the sustaining part or parts on both sides of the hollow, preferably in around half its height.

11. The wall-sided sustaining member according to one of the claims 8 to 10, **characterized in that** it comprises a frame part (25) which forms the upper border (26) of the hollow (3).

12. The wall-sided sustaining member according to claim 8 or 9, **characterized in that** it comprises two frame parts (5).

13. The wall-sided sustaining member according to one of the claims 8 to 12, **characterized in that** the first sustaining parts are formed by noses sticking out into the hollow.

14. Frame part (5) for a wall-sided sustaining member according to one of the claims 8 to 13, **characterized in that** it is formed to enclose a building brick area and carries at least a sustaining part, particularly a nose which is sticking out.

15. Wall-sided sustaining member for an arrangement according to one of the claims 1 to 7, **characterized in that** it consists of an intake box (40) with sustaining parts (8) disposed to it.

16. Wall-sided sustaining member according to claim 15, **characterized in that** the sustaining parts (8) consist of shapings which protrude into the interior of the box, particularly of nose-shaped shapings, which are arranged particularly approximately in the area of half the height of the intake box.

17. Wall-sided sustaining member according to claim 15 or 16, **characterized in that** the intake box (40) consists of plastic and the sustaining parts (8) of an element (43) disposed at the box consist of metal.

18. Mounting plate (10) for an arrangement according to one of the claims 1 to 7, which mounting plate comprises at least a hollow (11) for the mounting of an interface, **characterized in that** the mounting plate holds sustaining parts (12 to 22) which are aimed to engage in a form-fitting way with sustaining parts (8) of a wall-sided sustaining member.

19. The mounting plate according to claim 18, **characterized in that** the sustaining parts (14) are adjustable with respect to their distance to the plate surface.

20. The mounting plate according claim 18 or 19, **characterized in that** the sustaining parts are pivotable into a transport position substantially parallel to the plate surface and are pivotable out of it into an operating position.

21. The mounting plate according to one of the claims 18 to 20, **characterized in that** the sustaining parts comprise a transversely displaceable slide (14, 15) which is arranged at a carrier (12, 13), particularly at a pivotally arranged carrier, with at least a hollow which is aimed for the engagement into a first sustaining part.

22. Reduction plate for an arrangement according to one of the claims 1 to 7 for the attachment of a mounting plate (10) above a hollow which is larger than the mounting plate, **characterized in that** the reduction plate is formed to attach to the wall-sided sustaining members (1, 5, 25) by screw and which comprises an opening which has the first sustaining parts (8).

## Revendications

1. Dispositif de fixation d'une interface d'installation domestique dans un mur (2, 27, 28, 29), le dispositif comprenant un moyen (1, 40) de maintien du côté du mur ayant des premières parties (8) de maintien et une plaque (10) de montage pouvant être fixée au moyen de maintien du côté du mur et destinée à recevoir au moins une interface, **caractérisé en ce que** la plaque (10) de montage a des deuxièmes parties (12 à 22) de maintien destinées à coopérer avec les premières parties (8) de maintien, les premières et deuxièmes parties de maintien étant conformées pour s'interpénétrer en s'accrochant à complémentarité de forme.

2. Dispositif suivant la revendication 1, **caractérisé en ce que** les premières et/ou les deuxièmes parties (8, 12 à 22) de maintien sont disposées, et notamment réglables, de façon à ce que l'interpénétration puisse s'effectuer pour des distances différentes de la plaque (10) de montage et du moyen (1, 40) de maintien du côté du mur.

3. Dispositif suivant la revendication 2, **caractérisé en ce que** les premières et/ou les deuxièmes parties de maintien sont échelonnées et sont réglables en continu, de préférence dans chaque échelon.

4. Dispositif suivant l'une des revendications 1 à 3, **caractérisé en ce que** le moyen (17) de maintien du côté du mur est formé par un élément (2) de maçonnerie destiné à être maçonné dans un mur de maçonnerie ayant un évidement (3) moulé et formant un évidement de mur ouvert du côté de l'extérieur et par au moins une partie (5, 25) de châssis, qui est formée pour coopérer à complémentarité de forme avec au moins une partie (4, 4') de la délimitation de l'évidement de l'élément (2) de maçonnerie et porte au moins une première partie (8) de maintien.

5. Dispositif suivant la revendication 4, **caractérisé en ce que** l'élément (2) de maçonnerie forme, en outre, un canal (3') pour un câble, de préférence sous la forme d'une goulotte s'ouvrant vers le haut.

6. Dispositif suivant l'une des revendications 1 à 3, **caractérisé en ce que** le moyen (1) de maintien du côté du mur est formé par un caisson (40) d'entrée, destiné à être mis dans un évidement de mur ayant des premières parties (8) de maintien qui y sont disposées.

7. Dispositif suivant l'une des revendications 4 à 6, **caractérisé en ce que** les premières parties de maintien sont formées par des becs (8) en saillie qui viennent, de préférence, à peu près à mi-hauteur de l'évidement (3).

8. Moyen (1) de maintien du côté du mur pour un dispositif suivant l'une des revendications 1 à 6, **caractérisé en ce que** ce moyen comprend un élément (2) de maçonnerie, qui est destiné à être maçonné dans un mur et qui est muni d'un évidement (3) moulé, lequel évidement est disposé de manière à former un évidement du mur ouvert du côté vers l'extérieur et au moins une partie (5, 25) de châssis pour l'évidement, laquelle est conformée pour la coopération à complémentarité de forme et/ou à complémentarité de force avec au moins une partie (4, 4') des surfaces de délimitation de l'évidement et porte au moins une première partie (8) de maintien.

9. Moyen de maintien du côté du mur suivant la revendication 8, **caractérisé en ce que** l'élément de maçonnerie a, en outre, un canal (3') pour un câble ouvert du côté frontal, de préférence sous la forme d'une goulotte s'ouvrant vers le haut.

10. Moyen de maintien du côté du mur suivant la revendication 8 ou 9, **caractérisé en ce que** la partie (5, 25) de châssis est conformée pour la mise en position de la ou des parties de maintien de part et d'autre de l'évidement, de préférence à peu près à mi-hauteur de celui-ci.

11. Moyen de maintien du côté du mur suivant l'une des revendications 8 à 10, **caractérisé en ce qu'**il comprend une partie (25) de châssis, qui forme la délimitation (26) supérieure de l'évidement (3).

12. Moyen de maintien du côté du mur suivant la revendication 8 ou 9, **caractérisé en ce qu'**il comprend deux parties (5) de châssis.

13. Moyen de maintien du côté du mur suivant l'une des revendications 8 à 12, **caractérisé en ce que** les premières parties de maintien sont formées par des becs (8) en saillie dans l'évidement.

14. Partie (5) de châssis pour un moyen de maintien du côté du mur suivant l'une des revendications 8 à 12, **caractérisée en ce qu'**elle est conformée pour entourer une partie d'un élément de maçonnerie et porte au moins une partie de maintien, notamment un bec en saillie.

15. Moyen de maintien du côté du mur pour un dispositif suivant l'une des revendications 1 à 7, **caractérisé en ce qu'**il est formé par un caisson (40) d'entrée ayant des premières parties (8) de maintien qui y sont disposées.

16. Moyen de maintien du côté du mur suivant la revendication 15, **caractérisé en ce que** les parties (8) de maintien sont formées de conformations faisant saillie à l'intérieur du caisson, notamment de conformations en forme de bec, qui sont disposées notamment à peu près dans la zone de la mi-hauteur du caisson d'entrée.

17. Moyen de maintien du côté du mur suivant la revendication 15 ou 16, **caractérisé en ce que** le caisson (40) d'entrée est en matière plastique et les parties (8) de maintien sont formées d'un élément (43) métallique disposé sur le caisson.

18. Plaque (10) de montage pour un dispositif suivant l'une des revendications 1 à 7, cette plaque de montage ayant au moins un évidement (11) pour le montage d'une interface, **caractérisée en ce que** la plaque de montage est munie de parties (12 à 22) de maintien, qui sont destinées à pénétrer à complémentarité de forme dans des parties (8) de maintien d'un moyen de maintien du côté du mur.

19. Plaque de montage suivant la revendication 18, **caractérisée en ce que** la distance des parties (14) de maintien à la surface de la plaque est réglable.

20. Plaque de montage suivant la revendication 18 ou 19, **caractérisée en ce que** les parties de maintien peuvent venir par pivotement en une position de transport sensiblement parallèle à la surface de la plaque et peuvent pivoter en-dehors de cette position dans une position de travail.

21. Plaque de montage suivant l'une des revendications 18 à 20, **caractérisée en ce que** les parties de maintien ont respectivement des chariots (14, 15) montés coulissants sur un support (12, 13), notamment sur un support monté pivotant, ces chariots ayant au moins un évidement qui est destiné à venir en prise dans une première partie de maintien.

22. Plaque (31) de réduction pour un dispositif suivant l'une des revendications 1 à 7 pour la fixation d'une plaque (10) de montage par un évidement qui est plus grand que la plaque de montage, **caractérisée en ce que** la plaque de réduction est conformée pour se visser au moyen (1, 5, 25) de maintien du côté du mur et a une ouverture qui est munie de premières parties (8) de maintien.
